# EUROPEAN PATENT APPLICATION

(11) **EP 3 085 240 A1**
(43) Date of publication of application: **26.10.2016**
(21) Application number: 14872164.0
(22) Date of filing: 10.12.2014
(51) Int. Cl.: A23D 9/00, A23G 1/00, A23G 1/30

(54) **FAT**

(30) Priority: 19.12.2013 JP 2013263001
(71) Applicant: The Nisshin Oillio Group, Ltd., Chuo-ku Tokyo 104-8285 (JP)
(72) Inventor: ARAI, Chie, Yokosuka-shi Kanagawa 239-0832 (JP); TAKEGUCHI, Seiya, Yokosuka-shi Kanagawa 239-0832 (JP); TAKABA, Masato, Yokosuka-shi Kanagawa 239-0832 (JP); UEHARA, Hidetaka, Yokosuka-shi Kanagawa 239-0832 (JP)
(74) Representative: Dennemeyer & Associates S.A.
(86) International application number: PCT/JP2014/082709
(87) International publication number: WO 2015/093372

(57) **Abstract**

Oils and fats containing 10 to 80 mass% of 1,3-distearoyl-2-oleoylglycerol (SOS) and including a triple chain length β-type SOS crystal are provided. In the measurement of the X-ray diffraction of the triple chain length β-type SOS crystal, the diffraction peak A corresponding to spacing of 3.95 to 4.05 Å, the diffraction peak B corresponding to spacing of 3.80 to 3.95 Å, the diffraction peak C corresponding to spacing of 3.70 to 3.80 Å, and the diffraction peak D corresponding to spacing of 3.60 to 3.70 Å are observed. The ratio of the diffraction intensity of the diffraction peak C to the diffraction intensity of the diffraction peak D is 0.35 or less.

## Description

### TECHNICAL FIELD

### CROSS-REFERENCE

This application claims priority from Japanese Patent Application No. 2013-263001 filed with the Japan Patent Office on December 19, 2013, the entire content of which is hereby incorporated by reference.

The present invention relates to oils and fats, and a method of manufacturing chocolate with the oils and fats.

### BACKGROUND ART

Chocolate is mainly made of cacao beans, and is a highly palatable food with the excellent flavor and melting mouthfeel. In particular, the tempered chocolate (chocolate containing only cocoa butter from the cacao beans as the oils and fats) has been known as the general chocolate. The tempered chocolate is usually obtained by tempering the melted chocolate mix made from the chocolate raw materials and then cooling and solidifying the tempered chocolate mix. The tempering is the process to produce the crystal nucleus of the stable crystal in the cocoa butter in the melted chocolate mix. The cocoa butter crystals can have various crystal structures, and the tempering is necessary to cool and solidify the chocolate mix so that stable cocoa butter crystals are produced more. Specifically, the tempering is performed in a manner that the temperature of the chocolate mix melting at 40 to 50°C is reduced to approximately 27 to 28°C and then increased again up to 29 to 31°C.

If the tempering can provide a proper amount of stable crystals, the solidifying speed in the cooling of the chocolate mix is accelerated and the volume of the chocolate mix is sufficiently reduced when the chocolate mix is solidified. In addition, in the above case, the solidified chocolate is separated from the mold smoothly (i.e., smoothly released from the mold). Furthermore, the fat bloom (white spot of oil and fat crystal appearing on the surface on the chocolate, which is hereinafter referred to as "bloom") is also suppressed. The obtained chocolate has not just the excellent glossiness but also the excellent resistance against the bloom during the preservation. Such proper tempering is called "proper tempering".

On the other hand, if the tempering provides a too small amount of stable crystals, the bloom often appears and moreover, in the preservation, the resistance against the bloom is deteriorated. In this case, the bloom appears in a short period of time in the preservation. Such tempering is called "under-tempering". If the tempering provides a too large amount of stable crystals, the chocolate becomes so rough that the resistance against bloom in the preservation may be deteriorated. Such tempering is called "over-tempering". In the manufacture of the chocolate, it is important to control the tempering to avoid the under-tempering and the over-tempering.

One way to control the tempering is to use a temper meter in the process of cooling the chocolate mix processed by tempering, and with this meter, the amount of heat generation from the crystallization of the oils and fats contained in the chocolate mix is patterned over time. In this method, based on the data obtained from the temper meter, the condition of the tempering machine is adjusted and accordingly the tempering is controlled. In this method, however, the measurement operation is complicated and takes some time. Moreover, every time the kind of chocolate mix is changed, it is necessary to do the measurement with the temper meter again and re-adjust the operation condition of the tempering machine on the basis of the measurement results. Furthermore, even if the chocolate mix in the properly tempered state is prepared with the temper meter, the crystallization of the oils and fats in the mix advances over time after the preparation of the mix, resulting in that the mix has higher viscosity. This makes it difficult to handle the mix.

On the other hand, the method of forming the chocolate with the simplified tempering that has been complicated is called "seeding method". In this seeding method, the powder of chocolate or the like is used as a seeding agent and added to and mixed into the chocolate mix. The seeding agent functions as the crystal nucleus of the stable crystal and therefore promotes the tempering. For example, methods of adding the crystal of 1,3-distearoyl-2-oleoylglycerol (SOS), 1,3-dibehenyl-2-oleoylglycerol (BOB), or the like as the seeding agent have been developed (for example, see JP-A-63-240745, JP-A-64-60330, JP-A-2-406, and JP-A-2-242639).

With the seeding method in which the crystals are used, the tempering can be simplified. It can be said that this method is highly convenient. The chocolate mix to be processed with the tempering is usually maintained at about 30°C. When the mix with such a mix temperature is processed by the seeding method with the crystals, however, the viscosity of the chocolate mix increases over time. It has been known that the higher viscosity makes it difficult to handle the chocolate mix.

The increase in viscosity of the chocolate mix can be suppressed by increasing the mix temperature of the chocolate mix. In this case, however, the crystals used in the seeding method need to have heat resistance. It has been known that, of the aforementioned crystals, the BOB crystal (β2-3 type crystal) has a melting point of 53°C and the SOS crystal (β2-3 type crystal) has a melting point of 41°C. That is to say, the BOB crystal has higher heat resistance than the SOS crystal. For this reason, the BOB crystal has been considered preferable as the seeding agent in the seeding method which is performed under the high mix temperature. For example, according to JP-A-63-240745, the stable crystals, BOB crystal and SOS crystal, are added as the seeding agent to the chocolate mix at 36°C by 5% each relative to the oils and fats in the chocolate mix. In the case of adding the BOB crystal, the glossy chocolate that can be easily released from the mold is obtained. On the other hand, in the case of adding the SOS crystal, it is difficult to release the chocolate from the mold according to the literature.

The BOB crystal is relatively expensive and since the BOB crystal needs to be added by as much as 5% relative to the oils and fats of the chocolate mix, it has been difficult to practically use the BOB crystal. In view of this, the development of the oils and fats with heat resistance high enough to be used for the seeding of the chocolate has been desired. In addition, the development of the melted chocolate mix that can be formed by the simple seeding method and has the stable mix viscosity even after the seeding has been desired.

### CITATION LIST

### PATENT LITERATURE

PATENT LITERATURE 1: JP-A-63-240745
PATENT LITERATURE 2: JP-A-64-60330
PATENT LITERATURE 3: JP-A-2-406
PATENT LITERATURE 4: JP-A-2-242639

### SUMMARY OF THE INVENTION

### PROBLEMS TO BE SOLVED BY THE INVENTION

An object of the present invention is to provide oils and fats with heat resistance high enough to be used for the seeding of the chocolate. Another object of the present invention is to provide a tempered melted chocolate mix prepared by a simple seeding method and easily treated because the increase in mix viscosity over time is suppressed. Another object of the present invention is to provide chocolate formed by cooling and solidifying the mix.

### SOLUTION TO THE PROBLEMS

As a result of concerted studies of the present inventors for achieving the above objects, the present inventors have found out that the heat resistance is improved largely when the oils and fats including a triple chain length β-type 1,3-distearoyl-2-oleoylglycerol (also referred to as SOS) crystal exhibiting the particular X-ray diffraction pattern are used for the seeding of the chocolate, and have thus completed the present invention.

An aspect of the present invention is oils and fats containing 10 to 80 mass% of SOS including a triple chain length β-type SOS crystal (SOS represents 1,3-distearoyl-2-oleoylglycerol). The triple chain length β-type SOS crystal exhibits an X-ray diffraction peak A corresponding to spacing of 3.95 to 4.05 Å, an X-ray diffraction peak B corresponding to spacing of 3.80 to 3.95 Å, an X-ray diffraction peak C corresponding to spacing of 3.70 to 3.80 Å, and an X-ray diffraction peak D corresponding to spacing of 3.60 to 3.70 Å. The ratio of the diffraction intensity of the diffraction peak C to the diffraction intensity of the diffraction peak D is 0.35 or less.

A preferred aspect is the oils and fats further containing 10 to 70 mass% of XU2 and U3 in total (X represents a saturated fatty acid with 16 or more carbons, U represents an unsaturated fatty acid with 18 or more carbons, XU2 represents triacylglycerol with one acyl group derived from X and two acyl groups derived from U, and U3 represents triacylglycerol with three acyl groups derived from U).

In addition, a preferred aspect is the oils and fats including 40 mass% or more of SOS and 40 mass% or more of XU2 and U3 in total.

Another aspect of the present invention is a method of manufacturing oils and fats including a triple chain length β-type SOS crystal, the method including the following first to fourth processes:
first process: preparing oils and fats containing SOS by 10 to 80 mass%;
second process: melting an oil and fat crystal of the oils and fats after the first process completely;
third process: separating out the oil and fat crystal by cooling the oils and fats after the second process to 35°C or less; and
fourth process: maintaining the oils and fats after the third process in a temperature range of -2 to +4°C based on a melting point of the oils and fats after the first process.

Another aspect of the present invention is a method of manufacturing a melted and seeded chocolate mix, including adding oils and fats including a triple chain length β-type SOS crystal to a melted chocolate mix.

A preferred aspect is the method of manufacturing a melted and seeded chocolate mix, further including maintaining the melted and seeded chocolate mix at 32 to 40°C for 10 minutes or more.

Another aspect of the present invention is a method of manufacturing chocolate, including manufacturing a melted and seeded chocolate mix by any of the above methods and cooling and solidifying the melted and seeded chocolate mix.

Another aspect of the present invention is a method of suppressing the increase in viscosity of a melted and seeded chocolate mix, including maintaining a melted and seeded chocolate mix, which is obtained by adding oils and fats including a triple chain length β-type SOS crystal to a melted chocolate mix, at 32 to 40°C for 10 minutes or more.

### EFFECTS OF THE INVENTION

According to the present invention, the oils and fats with the heat resistance high enough to be used for the seeding of the chocolate are provided. Moreover, the method of manufacturing a tempered melted chocolate mix which is prepared by a simple seeding method and which can be easily treated because the increase in mix viscosity over time is suppressed is provided. In addition, the method of manufacturing chocolate by cooling and solidifying the mix is provided. Furthermore, the method of suppressing the increase in viscosity of the melted chocolate mix is provided.

### BRIEF DESCRIPTION OF THE DRAWINGS

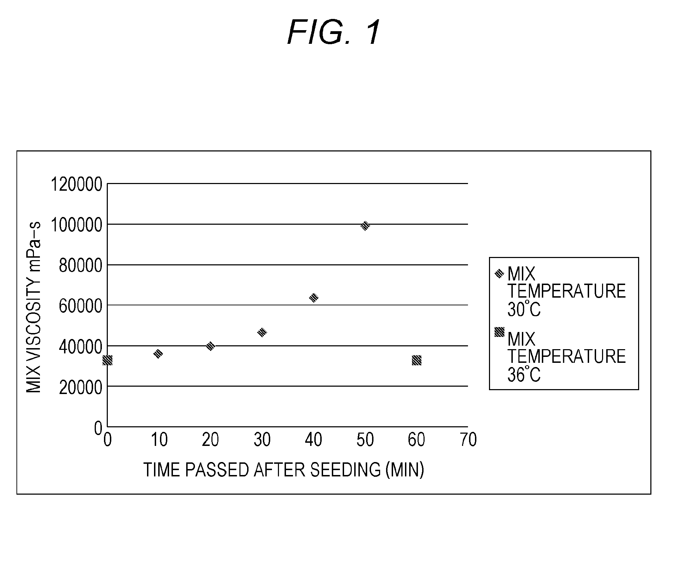

Fig. 1 expresses the change in mix viscosity of the chocolate mixes with different mix temperatures over time after the process of addition.

### DESCRIPTION OF THE EMBODIMENTS

The present invention will hereinafter be described in detail.

### [Oils and fats according to the present invention]

The oils and fats according to the present invention contain 10 to 80 mass% of SOS including the triple chain length β-type SOS crystal. The oils and fats according to the present invention contain SOS by preferably 10 to 60 mass%, more preferably 13 to 50 mass%, and much more preferably 15 to 40 mass%. The triple chain length β-type SOS crystal employed in the present invention is the stable crystal of 1,3-distearoyl-2-oleoylglycerol (SOS) with a chain length structure including three molecular chains. This stable crystal has a sub-lattice of the β-tyge triclinic system. Whether the SOS crystal type is the triple chain length β-type or not is determined based on the diffraction peak obtained by the measurement of the X-ray diffraction (powder method). That is to say, the short spacing of the oil and fat crystal is measured based on the X-ray diffraction with 20 ranging from 17 to 26°. On this occasion, the oil and fat crystal is determined as the β-type crystal when the intensive diffraction peak corresponding to the spacing of 4.5 to 4.7 Å is detected but the diffraction peak corresponding to the spacing of 4.1 to 4.3 Å and the diffraction peak corresponding to the spacing of 3.8 to 3.9 Å are not detected or even if those peaks are detected, the detected diffraction peaks are weak. The long spacing of the oil and fat crystal is measured with 20 ranging from 0 to 8°. Here, if the intensive diffraction peak corresponding to the spacing of 60 to 65 Å is detected, this oil and fat crystal is determined as having the triple chain length structure.

The diffraction peaks of the triple chain length β-type SOS crystal included in the oils and fats according to the present invention are obtained by the X-ray diffraction conducted at 20°C or less (0 to 20°C), and the intensity ratio (peak G' intensity/peak G intensity) of the diffraction intensity of the diffraction peak G' corresponding to the spacing of 4.1 to 4.3 Å to the diffraction intensity of the diffraction peak G corresponding to the spacing of 4.5 to 4.7 Å is preferably 0 to 0.3, more preferably 0 to 0.2, and much more preferably 0 to 0.1. While the intensity ratio of the X-ray diffraction peak is in the above range, the triple chain length β-type SOS crystal effectively functions as the seeding agent.

The oils and fats according to the present invention include the triple chain length β-type SOS crystal with the above X-ray diffraction peak characteristic. Further, the triple chain length β-type SOS crystal has the following X-ray diffraction peak characteristic. That is to say, in the X-ray diffraction measurement for this crystal, the diffraction peak A corresponding to the spacing of 3.95 to 4.05 Å, the diffraction peak B corresponding to the spacing of 3.80 to 3.95 Å, the diffraction peak C corresponding to the spacing of 3.70 to 3.80 Å, and the diffraction peak D corresponding to the spacing of 3.60 to 3.70 Å are observed. Then, the ratio of the diffraction intensity of the diffraction peak C to the diffraction intensity of the diffraction peak D (peak C intensity /peak D intensity) is 0.35 or less. The diffraction intensity ratio of the diffraction peak C to the diffraction peak D is preferably 0.33 or less, more preferably 0.30 or less, and much more preferably 0.25 or less. It is preferable that the X-ray diffraction peak of the SOS crystal included in the oils and fats according to the present invention is in the above range because the chocolate containing such oils and fats in the seeding has high heat resistance. It is appropriate that the X-ray diffraction measurement is conducted at the temperature at which the crystal is not melted. Specifically, the measurement is conducted at 20°C or less (0 to 20°C), and normally at 10°C. In the analysis concerning the intensity of the diffraction peak based on the measurement of the X-ray diffraction, it is appropriate to make correction to eliminate the influence of the amorphous part of the oils and fats on the base line. For example, it is appropriate to perform the background removal process by Sonneveld and Visser method or the like.

In the preparation of the oils and fats according to the present invention, preferably, oils and fats containing SOS (hereinafter also referred to as SOS-containing oils and fats) are used as the source of SOS. Examples of the SOS-containing oils and fats include oils and fats used as raw oils and fats of cacao butter substitutes, such as sal fat, shea fat, mowrah fat, mango kernel oil, Alan black kia fat, and pentadesma fat, and high-melting-point parts and medium-melting-point parts obtained by fractionating these oils and fats. In order to provide the SOS-containing oils and fats, the mixture of high oleic sunflower oil and stearic acid ethyl ester may be subjected to the interesterification reaction with a lipase preparation with the 1,3-position selectivity on the basis of the known method. Oils and fats obtained by removing the fatty acid ethyl ester from the resulting reaction product through distilling, and a high-melting-point part and a medium-melting-point part obtained by fractionating such oils and fats are used in the preparation of the oils and fats according to the present invention. The SOS-containing oils and fats contain SOS by preferably 40 mass% or more, more preferably 50 mass% or more, and much more preferably 60 to 90 mass%. The melting point of the SOS-containing oils and fats is preferably 30°C or more.

The oils and fats according to the present invention preferably contain XU2 and U3 by 10 to 70 mass% in total in addition to SOS. Here, X represents a saturated fatty acid with 16 or more carbons, U represents an unsaturated fatty acid with 18 or more carbons, and XU2 represents triacylglycerol with one acyl group derived from X and two acyl groups derived from U. Similarly, U3 represents triacylglycerol with three acyl groups derived from U. X represents preferably a saturated fatty acid with 16 to 22 carbons, more preferably a saturated fatty acid with 16 to 18 carbons. U represents preferably an unsaturated fatty acid with 18 to 22 carbons, more preferably an unsaturated fatty acid with 18 carbons.

The oils and fats according to the present invention contain XU2 and U3 by preferably 15 to 65 mass%, more preferably 25 to 60 mass%, and much more preferably 30 to 60 mass% in total. The mass ratio of XU2 to U3 (XU2/U3) is preferably 1 or more, more preferably 1.5 or more, and much more preferably 2 to 10. When the total content amount of XU2 and U3 in the oils and fats according to the present invention and the content ratio (XU2/U3) are in the above range, the triple chain length β-type SOS crystal can be uniformly dispersed in the oils and fats, which is preferable.

In the preparation of the oils and fats according to the present invention, the oils and fats containing a large amount of XU2 and U3 are preferably used as the source of producing XU2 and U3 (the oils and fats are also called "XU2 + U3 containing oils and fats"). The total content amount of XU2 and U3 in the XU2 + U3 containing oils and fats is preferably 40 mass% or more, more preferably 50 mass% or more, and much more preferably 55 to 100 mass%. The melting point of the XU2 + U3 containing oils and fats is preferably less than 30°C.

A preferred example of the oils and fats containing a large amount of XU2 and U3 (XU2 + U3 containing oils and fats) is palm-based oils and fats. Palm-based oils and fats correspond to the palm oil, the fractionated oil thereof, and the processed oil of the palm oil and the fractionated oil. Specific examples include (1) palm olein and palm stearin, which are one-stage fractionated oil of the palm oil, (2) palm olein (palm super olein) and palm mid fraction, which are fractionated oil obtained by fractionating the palm olein (two-stage fractionated oil), and (3) palm olein (soft palm), and palm stearin (hard stearin), which are fractionated oil obtained by fractionating the palm stearin (two-stage fractionated oil). In particular, it is preferable to use the palm super olein with an iodine value of 62 to 72, and more preferable to use the palm super olein with an iodine value of 64 to 70.

The XU2 + U3 containing oils and fats are preferably vegetable oils and fats which are liquid at room temperature (25°C). Specifically, soybean oil, rape-seed oil, corn oil, sunflower oil, safflower oil, sesame oil, cotton-seed oil, rice oil, olive oil, peanut oil, lin-seed oil, and mixed oil containing a plurality of oils selected from the above. In addition, hydrogenated oil, interesterified oil, fractionated oil, and other processed oil of any of the above oils or the mixed oil are also given. Among the liquid vegetable oils and fats, the oils and fats with transparency, which are liquid at 5°C, are more preferable.

The XU2 + U3 containing oils and fats are preferably the interesterified oil derived from the mixed oil of the palm-based oils and fats and the vegetable oils and fats which are liquid at room temperature (25°C). The mixing ratio (mass ratio) between the palm-based oils and fats and the liquid vegetable oils and fats included in this mixed oil is preferably 10 : 90 to 90 : 10, more preferably 20 : 80 to 80 : 20. A method of the interesterification is not limited in particular and may be a normal interesterification method. Examples of such a method include chemical interesterification with the synthetic catalyst such as sodium methoxide, and an enzymatic interesterification using the lipase as the catalyst. A particularly preferable method is the enzymatic interesterification using the lipase with the 1,3-position selectivity as the catalyst.

The oils and fats according to the present invention contain SOS by 10 to 80 mass%. Any edible oils and fats may be used as the oils and fats according to the present invention. A preferred aspect of the oils and fats according to the present invention is oils and fats prepared using the SOS-containing oils and fats and the XU2 + U3 containing oils and fats so that the SOS is contained by 10 to 80 mass% and XU2 and U3 are contained by 10 to 70 mass% in total. The SOS-containing oils and fats and the XU2 + U3 containing oils and fats are mixed so that the mass ratio therebetween is in the range of 15 : 85 to 95 : 5, more preferably 20 : 80 to 80 : 20, and much more preferably 30 : 70 to 60 : 40.

### [Method of manufacturing oils and fats according to the present invention]

According to an preferred aspect of a method of manufacturing oils and fats according to the present invention, the oils and fats are prepared through at least the following first to fourth processes.

The first process is a process of preparing oils and fats containing SOS by 10 to 80 mass%. Any edible oils and fats containing SOS by 10 to 80 mass% may be used and prepared. A preferred aspect of the first process is as already described.

The second process is a process of completely melting the oil and fat crystal included in the oils and fats after the first process. How to completely melt the oil and fat crystal is not particularly limited. For example, the crystal in the oils and fats may be completely melted by heating the oils and fats at preferably about 40 to 100°C, more preferably about 50 to 100°C.

The third process is a process of separating out the oil and fat crystal by cooling the oils and fats after the second process at 35°C or less (preferably, 10 to 30°C). The cooling may be carried out with a known cooler such as a votator, a combinatory, or Onlator. In order to make it easy to treat the oils and fats in the seeding of the chocolate, preferably, the oils and fats are mixed and kneaded during the cooling; thus, the paste-like or plastic oils and fats are prepared. During the kneading in the cooling, the gas such as nitrogen may be blown into the oils and fats. The amount of gas to be blown is preferably 5 to 40 vol%, more preferably 15 to 40 vol%, relative to the oils and fats. Through this process, the SOS in the oils and fats is separated out as the crystal.

The fourth process is a process of maintaining the temperature of the oils and fats after the third process within the range of -2 to +4°C (maintaining temperature range) based on the melting point of the oils and fats after the first process. The maintaining temperature is preferably in the range of -1 to +3°C based on the melting point of the oils and fats prepared in the first process. For example, if the oils and fats prepared in the first process have a melting point of 32°C, the oils and fats are maintained within the temperature range of 30 to 36°C. The melting point of the oils and fats prepared in the first process (slip melting point) is measured in accordance with the standard methods for the analysis of fats, oils and related materials 2.2.4.2 - 1996 and AOCS method. If the melting point of the oils and fats is not measured, the oils and fats may be maintained at 30.5 to 38°C (more preferably 31 to 36°C). In the fourth process, the oils and fats are maintained in the aforementioned temperature range for preferably 12 hours or more, more preferably 12 to 48 hours, and much more preferably 15 to 36 hours.

Through the fourth process, the SOS crystal in the oils and fats can be made into the triple chain length β-type. That is to say, in the X-ray diffraction measurement for this SOS crystal, the diffraction peak A corresponding to the spacing of 3.95 to 4.05 Å, the diffraction peak B corresponding to the spacing of 3.80 to 3.95 Å the diffraction peak C corresponding to the spacing of 3.70 to 3.80 Å, and the diffraction peak D corresponding to the spacing of 3.60 to 3.70 Å are observed. Then, the ratio of the diffraction intensity of the diffraction peak C to the diffraction intensity of the diffraction peak D is 0.35 or less.

The oils and fats according to the present invention may contain various kinds of additives which are normally used for the edible oils and fats unless such additives deteriorate the effect of the present invention. Examples of the additives include emulsifiers such as glycerin fatty acid ester, polyglycerol fatty acid ester, sucrose fatty acid ester, sorbitan fatty acid ester, polysorbate, and lecithin, antioxidants such as tocopherol, ascorbic acid fatty acid ester, lignan, coenzyme Q, orizanol, tea extract, and rutin, and flavors. These additives are used for the purpose of improving the preservation stability, the oxidation stability, and the thermal stability, and preparing the crystal for the oils and fats. The amount of these additives to be added is preferably 3 mass% or less relative to the oils and fats. The additives are added to preferably the melted oils and fats in the second process.

### [Intended application of oils and fats according to the present invention]

The oils and fats according to the present invention are used for the oil based food product including a continuous phase of oils and fats, such as filling, butter cream, spread, and soft cheese. The entire oils and fats of the oil based food product contain the oils and fats according to the present invention by 50 mass% or more, preferably 70 mass% or more, and the most preferably 90 mass% or more. This provides the oil based food product having a small amount of saturated fatty acid and trans fatty acid but having the excellent heat resistance and melting mouthfeel without the separation of liquid oil.

The oils and fats according to the present invention are useful as the seeding agent of the chocolate. In addition to the oils and fats according to the present invention, the seeding agent may have the solid content of saccharides, protein, and the like. It is particularly preferable that the oils and fats according to the present invention are used in the plastic state or paste state. In that case, the solid content of the saccharides, protein and the like relative to the oils and fats is preferably 0 to 30 mass%, more preferably 0%. The crystal diameter of the oils and fats in the seeding agent including the oils and fats according to the present invention is preferably less than 20 µm at 30°C.

### [Method of manufacturing chocolate mix and chocolate according to the present invention]

The present invention provides a method of manufacturing a chocolate mix in which the oils and fats including the triple chain length β-type SOS crystal according to the present invention are used as the seeding agent. That is to say, a method of manufacturing a melted chocolate mix containing a seeding agent, which includes a process of adding oils and fats including a triple chain length β-type SOS crystal according to the present invention to a melted chocolate mix (seeding process) is provided.

"Chocolate mix" according to the present invention refers to the liquid chocolate obtained by pulverizing and conching the raw materials of the chocolate. This liquid chocolate, i.e., "chocolate mix" is completely cooled and solidified in a subsequent process to provide a final form of solid chocolate. The chocolate mix in the "melted state" in the present invention refers to the chocolate mix containing the melted oils and fats. Whether the chocolate mix is in the melted state or not is determined by checking whether the chocolate obtained by cooling and solidifying the chocolate mix is easily released from the mold. If the obtained chocolate has failed to be released from the mold (specifically, the mold release ratio of the chocolate is less than 70%), it is determined that the chocolate mix is still in the melted state. Note that "oils and fats contained in the chocolate mix" in the present invention refer to not just the oils and fats alone, such as cocoa butter, but also the entire oils and fats included in the raw materials of the chocolate mix, such as cacao mass, cocoa powder, and whole milk powder. For example, in general, the cacao mass contains oils and fats (cocoa butter) by 55 mass% (oil content ratio), and the cocoa powder contains oils and fats (cocoa butter) by 11 mass% (oil content ratio), and the whole milk powder contains oils and fats (milk fat) by 25 mass% (oil content ratio). Thus, the amount of the oils and fats in the chocolate mix corresponds to the total of the values obtained by multiplying the oil content ratios by each amount of mixed raw materials included in the chocolate mix (mass%).

In the present invention, the oils and fats in the chocolate mix contain SOS by preferably 24 to 70 mass%. When the SOS content of the chocolate mix is in the above range, the chocolate obtained by cooling and solidifying the mix has the heat resistance. In addition, the obtained chocolate has the good melting mouthfeel and the excellent bloom resistance. When the oils and fats according to the present invention are used as the seeding agent of the chocolate in the high-temperature range (32 to 40°C), the seeding effect is easier to achieve. The oils and fats according to the present invention in the chocolate mix contain SOS by preferably 26 to 70 mass%, more preferably 27 to 60 mass%, much more preferably 30 to 55 mass%, and the most preferably 34 to 55 mass%.

The chocolate mix in the present invention is preferably the tempered type in order to efficiently achieve the seeding effect. Examples of the tempered type chocolate mix include the chocolate mix containing 40 to 90 mass% of XOX triacylglycerol (hereinafter also referred to as "XOX") relative to the oils and fats in the chocolate mix. Here, the XOX triacylglycerol is triacylglycerol in which an acyl group derived from the saturated fatty acid (X) is bound at the 1- and 3-positions of the glycerol skeleton and moreover an acyl group derived from the oleic acid (O) is bound at the 2-position thereof. The saturated fatty acid (X) preferably has 16 or more carbons, more preferably 16 to 22 carbons, and much more preferably 16 to 18 carbons. The oils and fats according to the present invention in the chocolate mix contain XOX by more preferably 50 to 90 mass%, and much more preferably 60 to 90 mass%.

In the process of adding the oils and fats including the triple chain length β-type SOS crystal, the chocolate mix may have a temperature (mix temperature) of 32 to 40°C. This mix temperature is higher than the normal mix temperature (about 30°C) in the seeding method. By maintaining the mix temperature at 32 to 40°C, the increase in viscosity of the chocolate mix can be suppressed. In addition, the low-melting-point oil and fat components other than the triple chain length β-type SOS crystal in the seeding agent (oils and fats according to the present invention) are melted. This enables the triple chain length β-type SOS crystal to be dispersed uniformly in the chocolate mix easily. As a result, the stable seeding effect is exhibited. In the process of adding the triple chain length β-type SOS crystal, the mix temperature is preferably 34 to 39°C, more preferably 35 to 39°C, and more preferably 37 to 39°C. If the mix temperature is high in the process of adding the triple chain length β-type SOS crystal, the amount of seeding agent to be added is increased in order to enable the efficient seeding.

In the process of adding the oils and fats including the triple chain length β-type SOS crystal, the triple chain length β-type SOS crystal is added to the chocolate mix in the melted state. The amount of SOS crystal to be added is preferably 0.05 to 5 mass%, more preferably 0.1 to 4.5 mass%, and much more preferably 0.2 to 4 mass% relative to the oils and fats included in the chocolate mix. Even if the mix temperature is high (for example, 32 to 40°C) or the chocolate mix is left under such high temperature, adding the triple chain length β-type SOS crystal in the amount within the above range provides the stable seeding effect. After the triple chain length β-type SOS crystal is added to the chocolate mix, the triple chain length β-type SOS crystal may be dispersed uniformly in the chocolate mix by stirring or the like.

The amount of triple chain length β-type SOS crystal in the oils and fats according to the present invention can be regarded equal to the amount of SOS contained in the oils and fats as long as the intensity ratio (peak G' intensity/peak G intensity) of the diffraction intensity of the diffraction peak G' corresponding to the spacing of 4.1 to 4.3 Å to the diffraction intensity of the diffraction peak G corresponding to the spacing of 4.5 to 4.7 Å in the X-ray diffraction measurement described above is 0 to 0.3.

For suppressing the increase in viscosity of the chocolate mix in the present invention, the chocolate mix in the melted state may be maintained at a mix temperature of 32 to 40°C for 10 minutes or more after the process of adding the triple chain length β-type SOS crystal By maintaining the chocolate mix at 32 to 40°C for 10 minutes or more after the triple chain length β-type SOS crystal is added to the chocolate mix, the increase in viscosity of the chocolate mix can be effectively suppressed. The temperature at which the chocolate mix with the triple chain length β-type SOS crystal added thereto is maintained is preferably 34 to 39°C, more preferably 35 to 39°C, and much more preferably 37 to 39°C. The length of time for which the chocolate mix with the triple chain length β-type SOS crystal added thereto is maintained at 32 to 40°C (maintaining time) is preferably 15 minutes or more, more preferably 30 minutes or more, much more preferably 1 to 24 hours, far more preferably 2 to 12 hours, and the most preferably 3 to 8 hours.

When the maintaining time is in the above range, the viscosity of the mix after the process of adding the triple chain length β-type SOS crystal can be suppressed to be 1.15 times or less (more preferably 1.1 times or less) the viscosity of the mix at the time of adding the triple chain length β-type SOS crystal. This makes it easier to treat the chocolate mix in the application for coating (enrobing). According to the present invention, for 30 minutes or more after the triple chain length β-type SOS crystal is added to the chocolate mix, the viscosity of the chocolate mix can be suppressed to be 1.2 times or less the viscosity of the mix at the time of adding the triple chain length β-type SOS crystal Note that the viscosity of the mix at the time of adding the triple chain length β-type SOS crystal and the viscosity of the mix after the addition are measured and compared under the same temperature condition.

The viscosity of the chocolate mix in the present invention is measured using a rotary viscometer, specifically the BH viscometer, in a manner that the No. 6 rotor is rotated at 4 rpm at the measurement temperature and the numeral read after the three rotations is multiplied by the unit factor, and the obtained numeral is the plastic viscosity.

The chocolate according to the present invention is obtained by, after the process of adding the oils and fats including the triple chain length β-type SOS crystal, cooling and solidifying the chocolate mix. As described herein, chocolate is not limited to the chocolate defined in "Fair Competition Codes concerning Labeling on Chocolates" (Japan Chocolate Industry Fair Trade Conference) or laws and regulations. That is, the main raw material of the chocolate according to the present invention is edible oils and fats and saccharides. Cacao components (cacao mass, cocoa powder, and the like), dairy products, flavors, emulsifiers, and the like are added to the main raw material as necessary. Such chocolate is manufactured through a part or the entire of chocolate manufacturing process (a mixing process, refining process, conching process, temperature adjusting process, molding process, cooling process, and the like). Also, the chocolate according to the present invention includes white chocolate and color chocolate as well as dark chocolate and milk chocolate.

From the viewpoint of workability and the flavor, the chocolate according to the present invention contains the oils and fats (corresponding to the total of the entire oils and fats in the chocolate, as defined above in the term "oils and fats contained in the chocolate mix") by preferably 25 to 70 mass%, more preferably 30 to 60 mass%, and much more preferably 30 to 50 mass%.

The chocolate mix and the chocolate according to the present invention may contain, in addition to the oils and fats, cacao mass, cocoa powder, saccharides, dairy products (solid milk product or the like), emulsifiers, flavors, and a pigment, which are normally used for the chocolate, and other food product modifiers such as starches, gums, thermally coagulative proteins, and various powders. The chocolate mix can be manufactured in accordance with the normal method through the mixing of the raw materials, refining with roll refining or the like, and if necessary, the conching process. The chocolate mix whose oil and fat crystal is completely melted by the heating in the conching process or the like can be used as the chocolate mix according to the present invention. In order not to deteriorate the flavor of the chocolate, the heating in the conching process is preferably performed at a temperature of 40 to 60°C. The chocolate mix in the present invention may be a water-containing substance containing water, fruit juice, any kind of foreign liquors, milk, condensed milk, fresh cream, or the like. The water-containing substance of the chocolate mix may be of either O/W emulsion type or W/O emulsion type.

A preferred aspect of the method of manufacturing the chocolate according to the present invention is the following method. (1) Oils and fats, cacao mass, saccharides, dairy products (solid milk product or the like), emulsifiers, and the like are mixed. The resulting mixture is refined through roll refining and then conched, whereby the chocolate mix in the melted state with a temperature of 32 to 40°C is prepared. (2) To the obtained chocolate mix, the oils and fats according to the present invention (seeding agent) containing the triple chain length β-type SOS crystal is added (seeding is performed) by 0.05 to 5 mass% relative to the oils and fats in the chocolate mix in the melted state, and this amount corresponds to the net amount of the triple chain length β-type SOS crystal After the seeding, the chocolate mix is continuously maintained at 32 to 40°C for 30 minutes or more. (3) The chocolate mix in the melted state after the seeding is poured into a mold or applied thinly on a baked confectionery or the like, and the chocolate mix is cooled and solidified. Thus, the chocolate is obtained. The condition of cooling and solidifying the chocolate can be adjusted as appropriate in accordance with the form of the chocolate to manufacture. In the process of cooling and solidifying the chocolate, the air may be mixed in the chocolate mix as necessary.

The chocolate according to the present invention can be eaten just after being released from the mold. Furthermore, the chocolate according to the present invention can be used as the coating, the filling, or chip materials to be mixed into mix for confectionary and bread baking products such as bread, cakes, western confectionary, baked confectionery, doughnuts, and cream puff cakes. With the chocolate according to the present invention, various kinds of chocolate composite food products can be provided.

The chocolate mix according to the present invention can suppress the increase in mix viscosity over time even if the chocolate mix is the tempered type containing much cocoa butter. Thus, the chocolate mix according to the present invention is suitable for manufacturing the chocolate coated food product such as chocolate coated confectioneries with the rich chocolate flavor.

### Examples

The present invention will be described in more detail with reference to Examples. The measurement of the content amount of each triacylglycerol, the melting point, and the X-ray diffraction of the oils and fats, and the measurement of the viscosity of the chocolate mix at each temperature are carried out by the method below.

### (Content amount of triacylglycerol)

The content amount of each triacylglycerol was measured by a gas chromatography method. The symmetric property of triacylglycerol was measured by silver ion column chromatography method.

### (Measurement of melting point)

The melting point of the oils and fats was measured in accordance with the standard methods for the analysis of fats, oils and related materials 2.2.4.2 - 1996.

### (Measurement of X-ray diffraction)

The X-ray diffraction of the oils and fats was measured using X-ray diffraction system Ultima IV (Rigaku Corporation) with CuKα (λ = 1.542 A) as a line source, a filter for Cu, an output of 1.6 kW, and an operation angle of 0.96 to 30.0°, and at a measurement speed of 2°/minute.

### (Viscosity of chocolate mix)

The viscosity of the chocolate mix was calculated using BH viscometer (TOKI SANGYO CO., LTD.) with the No. 6 rotor rotated at 4 rpm and the numeral read after the three rotations was multiplied by the unit factor (2500), and the obtained numeral was used as the viscosity.

### [Preparation of SOS-containing oils and fats A]

In accordance with the public method, 40 parts by mass of high oleic sunflower oil and 60 parts by mass of stearic acid ethyl ester were mixed. To the resulting mixture, a lipase preparation with the 1,3-position selectivity was added. In the mixture containing this lipase preparation, the interesterification reaction was carried out. The reaction product was filtered to remove the lipase preparation. The reaction product after the filtration was subjected to thin-film distillation, whereby the fatty acid ethyl was removed from the reaction product. From the distillation residue after the distillation, the high-melting-point part was removed through dry fractionating. From the obtained low-melting-point part, the low-melting-point part in the second stage was removed by acetone fractionating. Thus, acetone was removed from the obtained medium-melting-point part in accordance with the normal method. Next, this medium-melting-point part was subjected to a decoloring process and a deodorization process, whereby the SOS-containing oils and fats A were obtained. The obtained oils and fats contained SOS by 67.3 mass%.

### [Preparation of XU2 + U3 containing oils and fats A]

In accordance with the known method, the mixed oil containing 65 parts by mass of palm oil and 35 parts by mass of rape-seed oil was subjected to the interesterification reaction with the use of the lipase preparation with the 1,3-position selectivity. From the obtained reaction product, the lipase preparation was removed, thereby providing the interesterified oil. Next, the interesterified oil was subjected to a decoloring process and a deodorization process, whereby the XU2 + U3 containing oils and fats A were obtained. The obtained oils and fats contained XU2 by 41.0 mass% and U3 by 20.7 mass%.

### [Preparation of triple chain length β-type SOS crystal (seeding agent) - 1]

In accordance with the procedure below, the oils and fats including the triple chain length β-type SOS crystal were prepared as a seeding agent A and a seeding agent ***a***. Table 1 shows the results of measuring the X-ray diffraction of the seeding agents and the content amount of the triple chain length β-type SOS crystal.

### (Seeding agent A)

The SOS-containing oils and fats A for 25 parts by mass and the XU2 + U3 containing oils and fats A for 75 parts by mass were mixed. The resulting mixed oil was heated at 60°C to completely melt the oil and fat crystal included in the mixed oil. After that, nitrogen gas was blown into this mixed oil with Onlator, thereby crystalizing the oil through rapid cooling (final cooling temperature was 16°C). The amount of nitrogen to be blown was 15 vol% relative to the mixed oil. Next, the temperature of the mixed oil was maintained at 30.5°C for 24 hours, thereby providing the seeding agent A in the paste-like state.

### (Seeding agent a)

The SOS-containing oils and fats A for 25 parts by mass and the XU2 + U3 containing oils and fats A for 75 parts by mass were mixed. The resulting mixed oil was heated at 60°C to completely melt the oil and fat crystal included in the mixed oil. After that, nitrogen gas was blown into this mixed oil with Onlator, thereby crystalizing the oil through rapid cooling (final cooling temperature was 16°C). The amount of nitrogen to be blown was 15 vol% relative to the mixed oil. Next, the temperature of the fats and oils mixture was maintained at 27°C for 24 hours, thereby providing the seeding agent ***a*** in the paste-like state.

The melting point of the mixed oil obtained by mixing 25 parts by mass of the SOS-containing oils and fats A and 75 parts by mass of the XU2 + U3 containing oils and fats A was 30.6°C.

**[Table 1]**

| Table 1: Properties of seeding agents A and ***a*** | | |
|---|---|---|
| Seeding agent | A | ***a*** |
| Form | Paste | Paste |
| X-diffraction peak intensity ratio (peak G'/peak G) | 0 | 0 |
| Oil and fat crystal type | Triple chain length β-type | Triple chain length β-type |
| Content amount of triple chain length β-type SOS crystal | 16.8 mass% | 16.8 mass% |
| Content amount of XU2 | 33.1 mass% | 33.1 mass% |
| Content amount of U3 | 15.8 mass% | 15.8 mass% |
| Diffraction peak A | Diffraction intensity 27 | Diffraction intensity 24 |
| Diffraction peak B | Diffraction intensity 35 | Diffraction intensity 37 |
| Diffraction peak C | Diffraction intensity 15 | Diffraction intensity 18 |
| Diffraction peak D | Diffraction intensity 48 | Diffraction intensity 42 |
| X-diffraction peak intensity ratio (peak C/peak D) | 0.31 | 0.42 |

### [Evaluation on seeding of chocolate mix - 1]

In accordance with Table 2, the raw materials were mixed and subjected to roll refining and conching by the normal method, so that a melted chocolate mix A with a mix temperature of 35°C (mix containing oils and fats by 35 mass%) was prepared. To the melted chocolate mix A, the seeding agent A was added by 1.0 mass% relative to the oils and fats (0.168 mass% relative to the oils and fats contained in the melted chocolate mix as the triple chain length β-type SOS crystal). To another melted chocolate mix A prepared similarly, the seeding agent ***a*** was added by 10.0 mass% relative to the oils and fats (1.68 mass% relative to the oils and fats contained in the melted chocolate mix as the triple chain length β-type SOS crystal). Subsequently, these mixes A were maintained at 35°C while the mixes were stirred. A part of the chocolate mix A was extracted 60 minutes after the seeding agent was added. A mold of polycarbonate was filled with the extracted mix A. The mix A in the mold was cooled and solidified in a refrigerator at 10°C; thus, a sample for evaluation was prepared (Example 1, Comparative Example 1). The melted chocolate mix A heated at 50°C without the addition of the seeding agent was cooled down to 30°C with a normal tempering machine (a compact tempering machine (Minitemper, manufactured by Pavioni)). Next, the temperature was maintained at 30°C for one minute and then at 32°C for three minutes. By cooling and solidifying the mix A in this manner, a sample for evaluation as a reference was manufactured (Reference Example 1). Further, the melted chocolate mix A at 35°C without the seeding agent and without the tempering was cooled and solidified; thus, a sample for evaluation was manufactured (Comparative Example 2).

The chocolate manufactured in Comparative Examples 1 and 2, Example 1, and Reference Example 1 was subjected to the quality evaluation in accordance with the criteria below. Further, the viscosity of the mix was measured at 35°C when the chocolate mix was extracted in Comparative Examples 1 and 2 and Example 1. These evaluation results are shown in Table 3.

### (Evaluation on removal from mold)

Mold release ratio 15 minutes after the cooling and solidifying at 10°C (proportion of chocolate that was able to be removed from the mold)
Excellent (mold release ratio: 90% or more)
Good (mold release ratio: 70% or more and less than 90%)
Partially unreleased from the mold (mold release ratio: more than 0% and less than 70%)
Poor (mold release ratio: 0%)

### (Evaluation on state of solidified surface)

External appearance of chocolate released from the mold 15 minutes after the cooling and solidifying at 10°C
Excellent (bloom does not appear and the surface is highly glossy)
Good (bloom does not appear but a part of the surface is not very glossy)
Not good (bloom does not appear but the surface is not very glossy)
Poor (bloom is observed)

### (Evaluation on resistance against bloom)

The chocolate removed from the mold was preserved at 20°C for one week. Subsequently, the same chocolate was preserved at 32°C for 12 hours and then preserved at 20°C for 12 hours, these preservations being regarded as one cycle. This cycle was repeated. In every cycle, whether bloom has appeared on the preserved chocolate was visually checked. With reference to the number of cycles having passed until the bloom was first recognized on the chocolate, the resistance of the chocolate against the bloom was evaluated based on the following criteria.

### Excellent (6 or more cycles)

Good (4 to 5 cycles)
Not good (2 to 3 cycles)
Poor (0 to 1 cycle)

**[Table 2]**

| Table 2: Components of chocolate mix A | mass% |
|---|---|
| Cacao mass | 37.80 |
| Cocoa butter | 14.20 |
| Powder sugar | 47.45 |
| Lecithin | 0.5 |
| Flavors | 0.05 |
| Total | 100.0 |
| Content amount of oils and fats | 35 |
| Content amount of XOX in oils and fats | 86.1 |
| Content amount of SOS in oils and fats | 29.1 |

**[Table 3]**

| Table 3: Evaluation results of chocolate (seeding agent A or ***a,*** added at a temperature of 35°C) | | | | |
|---|---|---|---|---|
| | Comparative Example 2 | Example 1 | Comparative Example 1 | Reference Example 1 |
| Seeding agent added | None | A | ***a*** | None |
| Amount of added triple chain length β-type SOSs crystal (mass% relative to oils) | - | 0.168 | 1.68 | - |
| Maintaining time* | - | 60 | 60 | - |
| Removal from mold | Poor | Excellent | Good | Excellent |
| State of solidified surface | - | Excellent | Excellent | Excellent |
| Resistance against bloom | - | Excellent | Good | Good |
| Mix viscosity | 36250 | 35000 | 34750 | Not measured |
| Viscosity (magnification) + | 1 | 0.97 | 0.96 | - |

| | | | | |
|---|---|---|---|---|
| *: Maintaining time after seeding (unit: minute) -: Evaluation was impossible +: Magnification assuming that the mix viscosity in Comparative Example 2 is 1 | | | | |

The results shown in Table 3 indicate that the seeding agent A, which is the oils and fats according to the present invention, in the seeding at high temperature (35°C) provides the seeding effect about 10 times as high as the typical seeding agent ***a***.

### [Preparation of SOS-containing oils and fats B]

In accordance with the public method, 40 parts by mass of high oleic sunflower oil and 60 parts by mass of stearic acid ethyl ester were mixed. To the resulting mixture, a lipase preparation with the 1,3-position selectivity was added. In the mixture containing this lipase preparation, the interesterification reaction was carried out. The reaction product was filtered to remove the lipase preparation. The reaction product after the filtration was subjected to thin-film distillation, whereby the fatty acid ethyl was removed from the product. From the distillation residue after the distillation, the high-melting-point part was removed through dry fractionating. From the obtained low-melting-point part, the low-melting-point part in the second stage was removed by acetone fractionating. Thus, acetone was removed from the obtained medium-melting-point part in accordance with the normal method. Next, this medium-melting-point part was subjected to a decoloring process and a deodorization process, whereby the SOS-containing oils and fats B were obtained. The obtained oils and fats contained SOS by 74.8 mass%.

### [Preparation of XU2 + U3 containing oils and fats B]

Palm olein (iodine value: 65, containing XU2 by 56.3 mass%, and containing U3 by 7.8 mass%) was used as XU2 + U3 containing oils and fats B.

### [Preparation of XU2 + U3 containing oils and fats C]

High oleic sunflower oil (containing XU2 by: 21.5 mass% and containing U3 by 77.5 mass%) was used as XU2 + U3 containing oils and fats C.

### [Preparation of triple chain length β-type SOS crystal (seeding agent) - 2]

In accordance with the procedure below, the oils and fats including the triple chain length β-type SOS crystal were prepared as a seeding agent B and a seeding agent ***b***. Table 4 shows the results of measuring the X-ray diffraction of the seeding agents and the content amount of the triple chain length β-type SOS crystal.

### (Seeding agent B)

The SOS-containing oils and fats B for 50 parts by mass, the XU2 + U3 containing oils and fats B for 45 parts by mass, and the XU2 + U3 containing oils and fats C for 5 parts by mass were mixed. The resulting mixed oil was heated at 60°C to completely melt the oil and fat crystal included in the mixed oil. After that, nitrogen gas was blown into this mixed oil with Onlator, thereby crystalizing the oil through rapid cooling (final cooling temperature was 25°C). The amount of nitrogen to be blown was 35 vol% relative to the mixed oil. Next, the temperature of the mixed oil was maintained at 34°C for 24 hours, thereby providing the seeding agent B in the plastic state.

### (Seeding agent b)

The SOS-containing oils and fats B for 50 parts by mass, the XU2 + U3 containing oils and fats B for 45 parts by mass, and the XU2 + U3 containing oils and fats C for 5 parts by mass were mixed. The mixed oil was heated at 60°C to completely melt the oil and fat crystal included in the mixed oil. After that, nitrogen gas was blown into this mixed oil with Onlator, thereby crystalizing the oil through rapid cooling (final cooling temperature was 25°C). The amount of nitrogen to be blown was 35 vol% relative to the mixed oil. Next, the temperature of the fats and oils mixture was maintained at 30°C for 24 hours, thereby providing the seeding agent ***b*** in the plastic state.

Note that the mixed oil obtained by mixing 50 parts by mass of SOS-containing oils and fats B, 45 parts by mass of XU2 + U3 containing oils and fats B, and 5 parts by mass of XU2 + U3 containing oils and fats C had a melting point of 31.5°C.

**[Table 4]**

| Table 4: Properties of seeding agents B and ***b*** | | |
|---|---|---|
| Seeding agent | B | ***b*** |
| Form | Plastic | Plastic |
| X-diffraction peak intensity ratio (peak G'/peak G) | 0 | 0 |
| Oil and fat crystal type | Triple chain length β-type | Triple chain length β-type |
| Content amount of triple chain length β-type SOS crystal | 37.4 mass% | 37.4 mass% |
| Content amount of XU2 | 29.7 mass% | 29.7 mass% |
| Content amount of U3 | 7.8 mass% | 7.8 mass% |
| Diffraction peak A | Diffraction intensity 83 | Diffraction intensity 71 |
| Diffraction peak B | Diffraction intensity 95 | Diffraction intensity 73 |
| Diffraction peak C | Diffraction intensity 39 | Diffraction intensity 43 |
| Diffraction peak D | Diffraction intensity 187 | Diffraction intensity 116 |
| X-diffraction peak intensity ratio (peak C/peak D) | 0.21 | 0.37 |

### [Evaluation on seeding of chocolate mix - 2]

In accordance with Table 2, the raw materials were mixed and subjected to roll refining and conching by the normal method, so that a melted chocolate mix A with a mix temperature of 36°C (mix containing oils and fats by 35 mass%) was prepared. To the melted chocolate mix A, the seeding agent B was added by 1.0 mass% relative to the oils and fats (0.374 mass% relative to the oils and fats contained in the melted chocolate mix as the triple chain length β-type SOS crystal). To another melted chocolate mix A prepared similarly, the seeding agent ***b*** was added by 5.0 mass% relative to the oils and fats (1.87 mass% relative to the oils and fats contained in the melted chocolate mix as the triple chain length β-type SOS crystal). Subsequently, these mixes A were maintained at 36°C while the mixes were stirred. A part of the chocolate mix A was extracted 60 minutes after the seeding agent was added. A mold of polycarbonate was filled with the extracted mix A. The mix A in the mold was cooled and solidified in a refrigerator at 10°C; thus, a sample for evaluation was prepared (Example 2, Comparative Example 3). Further, the melted chocolate mix A at 36°C without the seeding agent and without the tempering was cooled and solidified; thus, a sample for evaluation was manufactured (Comparative Example 4).

The chocolate manufactured above in Comparative Examples 3 and 4 and Example 2 was subjected to the quality evaluation in accordance with the evaluation criteria similar to that of [Evaluation on seeding of chocolate mix - 1]. Moreover, when the chocolate mix was extracted, the viscosity of the mix was measured at 36°C. These evaluation results are shown in Table 5. In Table 5, the mark "*" represents the maintaining time (unit: minute) after the seeding, the mark "-" represents that the evaluation was impossible, and the mark "+" represents the magnification assuming that the viscosity of the mix in Comparative Example 4 is 1.

**[Table 5]**

| Table 5: Evaluation results of chocolate (seeding agent B or ***b*** added at a temperature of 36°C) | | | |
|---|---|---|---|
| | Comparative Example 4 | Example 2 | Comparative Example 3 |
| Seeding agent added | None | B | ***b*** |
| Content amount of added triple chain length β-type SOS crystal (mass% relative to oils) | - | 0.374 | 1.87 |
| Maintaining time* | - | 60 | 60 |
| Removal from mold | Poor | Excellent | Excellent |
| State of solidified surface | - | Excellent | Excellent |
| Resistance against bloom | - | Excellent | Good |
| Mix viscosity | 33000 | 33000 | 32500 |
| Viscosity (magnification) + | 1 | 1 | 0.98 |

| | | | |
|---|---|---|---|
| *: Maintaining time after seeding (unit: minute) -: Evaluation was impossible +: Magnification assuming that the mix viscosity in Comparative Example 4 is 1 | | | |

The results shown in Table 5 indicate that the seeding agent B, which is the oils and fats according to the present invention, in the seeding at high temperature (36°C) provides the seeding effect about 5 times as high as the typical seeding agent ***b***.

### [Evaluation on seeding of chocolate mix - 3]

In accordance with Table 2, the raw materials were mixed and subjected to roll refining and conching by the normal method, so that the melted chocolate mix A with a mix temperature of 30°C (mix containing oils and fats by 35 mass%) was prepared. To the melted chocolate mix A, the seeding agent ***b*** was added by 1.0 mass% relative to the oils and fats (0.374 mass% relative to the oils and fats contained in the liquid chocolate as the triple chain length β-type SOS crystal). Subsequently, the mix A was maintained at 30°C while the mix A was stirred. A part of the chocolate mix A was extracted as a sample before the addition of the seeding agent and at 10 minutes, 20 minutes, 30 minutes, 40 minutes, and 50 minutes after the addition of the seeding agent. The viscosity of the extracted sample at each time was measured (Comparative Examples 5 to 10). The results are shown in Table 6. In Table 6, the mark "*" represents the maintaining time (unit: minute) after the seeding, the mark "-" represents that the evaluation was impossible, and the mark "+" represents the magnification assuming that the viscosity of the mix in Comparative Example 5 is 1.

The change in viscosity of the chocolate mix in Comparative Examples 5 to 10 (Table 6) and the change in viscosity of the chocolate mix in Example 2 in the aforementioned [Evaluation on seeding of chocolate mix - 2] (mix temperature: 36°C, maintaining time: 0 minutes and 60 minutes) are shown in Fig. 1.

Fig. 1 indicates that the viscosity of the chocolate mixes in Comparative Examples 5 to 10 including the typical seeding agent b has drastically increased while the mixes are maintained at the seeding temperature (30°C). It is therefore assumed that treating the seeded chocolate mix is difficult. On the other hand, the viscosity of the chocolate mix in Example 2 including the seeding agent B according to the present invention after being maintained at the seeding temperature (36°C) for 60 minutes has not increased drastically. Thus, it is expected that the seeded chocolate mix including the seeding agent B according to the present invention is easily treated.

**[Table 6]**

| Table 6: Evaluation results of chocolate (seeding agent ***b***, seeded at 30°C) | | | | | | |
|---|---|---|---|---|---|---|
| | Comparative Example 5 | Comparative Example 6 | Comparative Example 7 | Comparative Example 8 | Comparative Example 9 | Comparative Example 10 |
| Maintaining time* | - | 10 | 20 | 30 | 40 | 50 |
| Mix viscosity | 34250 | 36000 | 39750 | 46500 | 63500 | 99000 |
| Viscosity (magnification) + | 1 | 1.05 | 1.16 | 1.36 | 1.86 | 2.89 |

The results shown in Table 6 indicate that at the normal seeding temperature (30°C), the viscosity rapidly increases even though the seeding agent ***b*** with the lower seeding effect is used.

### [Preparation of BOB-containing oils and fats]

In accordance with the known method, 40 parts by mass of high oleic sunflower oil and 60 parts by mass of behenic acid ethyl ester were mixed. To the resulting mixture, a lipase preparation with the 1,3-position selectivity was added. The mixture containing the lipase preparation was subjected to the interesterification reaction. The reaction product was filtered to remove the lipase preparation. The reaction product after the filtration was subjected to thin-film distillation, whereby the fatty acid ethyl was removed from the product. From the distillation residue after the distillation, the high-melting-point part was removed through dry fractionating. From the obtained low-melting-point part, the low-melting-point part in the second stage was removed by acetone fractionating. Thus, acetone was removed from the obtained medium-melting-point part in accordance with the normal method. Next, this medium-melting-point part was subjected to a decoloring process and a deodorization process, whereby the BOB-containing oils and fats were obtained. The obtained oils and fats contained BOB by 65.0 mass%.

### [Preparation of triple chain length β-type BOB crystal (seeding agent)]

In accordance with the procedure below, the oils and fats including the triple chain length β-type BOB crystal were prepared as a seeding agent C. The results of measuring the X-ray diffraction of the seeding agent C and the content amount of triple chain length β-type BOB crystal are shown in Table 7.

### (Seeding agent C)

By heating the BOB-containing oils and fats, the oil and fat crystal included in the BOB-containing oils and fats was melted completely. After that, the BOB-containing oils and fats were cooled to 20°C so that the BOB-containing oils and fats were crystalized. Subsequently, the BOB-containing oils and fats were maintained at 30°C for 12 hours and then maintained at 50°C for 12 hours, these preservations being regarded as one temperature adjustment cycle. This cycle was repeated 14 times. After that, the crystalized BOB-containing oils and fats were pulverized at -20°C. Then, the pulverized crystalized oils and fats were sieved to provide the powdered seeding agent C including the particles with an average particle diameter of 100 µm. The crystal type of the seeding agent C was checked through the X-ray diffraction. As a result, it has been confirmed that the crystal included in the seeding agent C is triple chain length type (diffraction peak corresponding to 70 to 75 Å) and β-type (very intensive diffraction peak corresponding to 4.5 to 4.7 Å).

**[Table 7]**

| Table 7: Properties of seeding agent C | |
|---|---|
| Seeding agent | C |
| Form | Powder |
| X-diffraction peak intensity ratio (peak G'/peak G) | 0 |
| Oil and fat crystal type | Triple chain length β-type |
| Content amount of triple chain length β-type BOB crystal | 65.0 mass% |

### [Evaluation on seeding of chocolate mix - 3]

In accordance with Table 8, the raw materials were mixed and subjected to roll refining and conching by the normal method, so that a melted chocolate mix B with a mix temperature of 38°C (mix containing oils and fats by 35 mass%) was prepared. To the melted chocolate mix B, the seeding agent B was added by 1.0 mass% relative to the oils and fats (0.374 mass% relative to the oils and fats contained in the melted chocolate mix as the triple chain length β-type SOS crystal). Subsequently, the mix B was maintained at 38°C while the mix B was stirred. A part of the chocolate mix B was extracted 60 minutes after the seeding agent was added. A mold of polycarbonate was filled with the extracted mix B. The mix B in the mold was cooled and solidified in a refrigerator at 10°C (Example 3). Moreover, similarly, the seeding agent C was added to the melted chocolate mix B with a mix temperature of 38°C by 1.0 mass% relative to oils (0.65 mass% of the seeding agent C relative to the oils and fats contained in the melted chocolate mix as the triple chain length β-type BOB crystal). Subsequently, the mix B was maintained at 38°C while the mix B was stirred. A part of the chocolate mix B was extracted 60 minutes after the seeding agent was added. A mold of polycarbonate was filled with the extracted mix B. The mix B in the mold was cooled and solidified in a refrigerator at 10°C; thus a sample for evaluation was manufactured (Comparative Example 5). Further, another sample for evaluation was manufactured by cooling and solidifying the melted chocolate mix B at 38°C without the seeding agent and without the tempering (Comparative Example 6).

The chocolate in Comparative Examples 5 and 6 and Example 3 manufactured above was subjected to the quality evaluation in accordance with the evaluation criteria similar to those of [Evaluation on seeding of chocolate mix - 1]. Moreover, when the chocolate mix was extracted, the viscosity of the mix was measured at 38°C. These evaluation results are shown in Table 9. In Table 9, the mark "*" represents the maintaining time (unit: minute) after the seeding, the mark "-" represents that the evaluation was impossible, and the mark "+" represents the magnification assuming that the viscosity of the mix in Comparative Example 6 is 1.

**[Table 8]**

| Table 8: Components of chocolate mix B | mass% |
|---|---|
| Cacao mass | 29.49 |
| Cocoa powder | 4.2 |
| SOS-containing oils and fats A | 18.32 |
| Powder sugar | 47.44 |
| Lecithin | 0.5 |
| Flavors | 0.05 |
| Total | 100.0 |
| Content amount of oils and fats | 35 |
| Content amount of XOX in oils and fats | 84.0 |
| Content amount of SOS in oils and fats | 49.1 |

**[Table 9]**

| Table 9: Evaluation results of chocolate (seeding agent B or C, added at a temperature of 38°C) | | | |
|---|---|---|---|
| | Comparative Example 6 | Example 3 | Comparative Example 5 |
| Seeding agent added | None | B | C |
| Amount of added triple chain length β-type SOS crystal (mass% relative to oils) | - | 0.374 | - |
| Amount of added triple chain length β-type BOB crystal (mass% relative to oils) | - | - | 0.65 |
| Maintaining time* | - | 60 | 60 |
| Removal from mold | Poor | Excellent | Poor |
| State of solidified surface | - | Excellent | - |
| Resistance against bloom | - | Excellent | - |
| Mix viscosity | 26250 | 25750 | 25000 |
| Viscosity (magnification) + | 1 | 0.98 | 0.95 |

| | | | |
|---|---|---|---|
| *: Maintaining time after seeding (unit: minute) -: Evaluation was impossible +: Magnification assuming that the mix viscosity in Comparative Example 6 is 1 | | | |

The results shown in Table 9 indicate that the triple chain length β-type BOB crystal as the seeding agent C, which was used in Comparative Example 5, in the seeding at high temperature (38°C) was maintained at the same temperature and after 60 minutes, did not exhibit the seeding effect. On the other hand, the seeding agent B as the oils and fats according to the present invention, which was employed in Example 3, exhibited the stable seeding effect.

The oils and fats according to the present invention may be any of the following first to third oils and fats.

The first oils and fats are oils and fats including a triple chain length β-type SOS crystal (SOS represents 1,3-distearoyl-2-oleoylglycerol) containing SOS by 10 to 80 mass%. According to the measurement of the X-ray diffraction, the oils and fats including a triple chain length β-type SOS crystal include a diffraction peak A corresponding to spacing of 3.95 to 4.05 Å, a diffraction peak B corresponding to spacing of 3.80 to 3.95 Å, a diffraction peak C corresponding to spacing of 3.70 to 3.80 Å, and a diffraction peak D corresponding to spacing of 3.60 to 3.70 Å, and exhibit the diffraction peak C with 0.35 or less of the diffraction intensity to the diffraction intensity of the diffraction peak D.

The second oils and fats are the first oils and fats including the triple chain length β-type SOS crystal configured such that the oils and fats including the triple chain length β-type SOS crystal contain XU2 and U3 by 10 to 70 mass% in total (X represents a saturated fatty acid with 16 or more carbons, U represents an unsaturated fatty acid with 18 or more carbons, XU2 represents triacylglycerol with one X bound to two Us, and U3 represents triacylglycerol with three Us bound).

The third oils and fats are the first or second oils and fats including the triple chain length β-type SOS crystal configured such that the oils and fats including the triple chain length β-type SOS crystal include oils and fats containing SOS by 40 mass% or more and oils and fats containing XU2 and U3 by 40 mass% or more in total.

A method of manufacturing oils and fats according to the present invention may be a method of manufacturing oils and fats including a triple chain length β-type SOS crystal, the method including the following first to fourth processes:
first process: preparing oils and fats containing SOS by 10 to 80 mass%;
second process: melting an oil and fat crystal of the oils and fats after the first process completely;
third process: separating out the oil and fat crystal by cooling the oils and fats after the second process to 35°C or less; and
fourth process: maintaining the oils and fats after the third process in a temperature range of -2 to +4°C based on the melting point of the oils and fats after the first process.

A method of manufacturing a melted and seeded chocolate mix according to the present invention may be the following first or second method of manufacturing a melted and seeded chocolate mix.

The first method of manufacturing a melted and seeded chocolate mix is a method of manufacturing a melted and seeded chocolate mix, including a process of adding oils and fats including a triple chain length β-type SOS crystal to a melted chocolate mix.

The second method of manufacturing a melted and seeded chocolate mix is the first method of manufacturing a melted and seeded chocolate mix, further including a process of maintaining the melted and seeded chocolate mix at 32 to 40°C for 10 minutes or more.

A method of manufacturing chocolate according to the present invention may be a method of manufacturing chocolate, including a process of cooling and solidifying a melted and seeded chocolate mix, which is obtained by adding oils and fats including a triple chain length β-type SOS crystal to a melted chocolate mix.

A method of suppressing the increase in viscosity of a melted and seeded chocolate mix according to the present invention may be a method of suppressing the increase in viscosity of a melted and seeded chocolate mix, including the process of maintaining a melted and seeded chocolate mix, which is obtained by adding oils and fats including a triple chain length β-type SOS crystal to a melted chocolate mix, at 32 to 40°C for 10 minutes or more.

## Claims

1. Oils and fats comprising 10 to 80 mass% of SOS including a triple chain length β-type SOS crystal (SOS represents 1,3-distearoyl-2-oleoylglycerol), wherein
the triple chain length β-type SOS crystal exhibits an X-ray diffraction peak A corresponding to spacing of 3.95 to 4.05 Å, an X-ray diffraction peak B corresponding to spacing of 3.80 to 3.95 Å, an X-ray diffraction peak C corresponding to spacing of 3.70 to 3.80 Å, and an X-ray diffraction peak D corresponding to spacing of 3.60 to 3.70 Å, and
a ratio of diffraction intensity of the diffraction peak C to diffraction intensity of the diffraction peak D is 0.35 or less.

2. The oils and fats according to claim 1, further comprising 10 to 70 mass% of XU2 and U3 in total (X represents a saturated fatty acid with 16 or more carbons, U represents an unsaturated fatty acid with 18 or more carbons, XU2 represents triacylglycerol with one acyl group derived from X and two acyl groups derived from U, and U3 represents triacylglycerol with three acyl groups derived from U).

3. The oils and fats according to claim 2, comprising:
oils and fats containing 40 mass% or more of SOS; and
oils and fats containing 40 mass% or more of XU2 and U3 in total.

4. A method of manufacturing oils and fats including a triple chain length β-type SOS crystal, the method comprising the following first to fourth processes:
a first process: preparing oils and fats containing SOS by 10 to 80 mass%;
a second process: melting an oil and fat crystal of the oils and fats after the first process completely;
a third process: separating out the oil and fat crystal by cooling the oils and fats after the second process to 35°C or less; and
a fourth process: maintaining the oils and fats after the third process in a temperature range of -2 to +4°C based on a melting point of the oils and fats after the first process.

5. A method of manufacturing a melted and seeded chocolate mix, comprising adding oils and fats including a triple chain length β-type SOS crystal to a melted chocolate mix.

6. The method of manufacturing a melted and seeded chocolate mix according to claim 5, further comprising maintaining the melted and seeded chocolate mix at 32 to 40°C for 10 minutes or more.

7. A method of manufacturing chocolate, comprising manufacturing a melted and seeded chocolate mix by the method according to claim 5 or 6 and cooling and solidifying the melted and seeded chocolate mix.

8. A method of suppressing increase in viscosity of a melted and seeded chocolate mix, comprising maintaining a melted and seeded chocolate mix, which is obtained by adding oils and fats including a triple chain length β-type SOS crystal to a melted chocolate mix, at 32 to 40°C for 10 minutes or more.
